(19) Europäisches Patentamt
European Patent Office
Office européen des brevets

(11) EP 3 205 991 A1

(12) DEMANDE DE BREVET EUROPEEN

(43) Date de publication:
16.08.2017 Bulletin 2017/33

(51) Int Cl.:
*G01J 5/24* $^{(2006.01)}$

(21) Numéro de dépôt: 17157363.7

(22) Date de dépôt: 11.12.2008

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **12.12.2007 FR 0759787**

(62) Numéro(s) de document de la (des) demande(s) initiale(s) en application de l'article 76 CBE:
**08305911.3 / 2 071 309**

(71) Demandeur: **ULIS**
**38113 Veurey Voroize (FR)**

(72) Inventeurs:
• **DUPONT, Benoît**
**1180 BRUXELLES (BE)**
• **VILAIN, Michel**
**38450 SAINT-GEORGES DE COMMIERS (FR)**

(74) Mandataire: **Cabinet Laurent & Charras**
**Le Contemporain**
**50 Chemin de la Bruyère**
**69574 Dardilly Cedex (FR)**

Remarques:
Cette demande a été déposée le 22-20-2017 comme demande divisionnaire de la demande mentionnée sous le code INID 62.

(54) **DISPOSITIF POUR LA DETECTION D'UN RAYONNEMENT INFRAROUGE COMPORTANT UN BOLOMETRE RESISTIF D'IMAGERIE, SYSTEME COMPRENANT UNE MATRICE DE TELS BOLOMETRES, ET PROCEDE DE LECTURE D'UN BOLOMETRE D'IMAGERIE INTEGRE DANS UN TEL SYSTEME**

(57) Ce dispositif pour la détection d'un rayonnement infrarouge comporte un bolomètre résistif d'imagerie (102), destiné à être connecté électriquement à un circuit de mesure (22) d'une résistance de celui-ci.

Il comporte des moyens (32) de commande de la résistance du bolomètre d'imagerie (14) par injection de courant dans celui-ci.

Fig. 2

EP 3 205 991 A1

**Description**

**DOMAINE DE L'INVENTION**

La présente invention a trait au domaine de l'imagerie infrarouge et de la pyrométrie bolométrique.

Plus particulièrement, la présente invention concerne un dispositif pour la détection d'un rayonnement infrarouge comportant un bolomètre résistif d'imagerie. Elle concerne également un système comprenant une matrice de tels dispositifs ainsi qu'un procédé de lecture d'un bolomètre d'imagerie intégré dans un tel système.

**ETAT ANTERIEUR DE LA TECHNIQUE**

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés "détecteurs quantiques" qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur ;
- des moyens d'isolation thermique du détecteur, de telle sorte à permettre à celui-ci de s'échauffer sous l'action du rayonnement infrarouge ;
- des moyens de thermométrie qui, dans le cadre d'un détecteur bolométrique, mettent en oeuvre un élément résistif ;
- et des moyens de lecture des signaux électriques fournis par les moyens de thermométrie.

Les détecteurs destinés à l'imagerie infrarouge sont classiquement réalisés sous la forme d'une matrice de détecteurs élémentaires, ou bolomètres, selon une ou deux dimensions, lesdits bolomètres étant suspendus au dessus d'un substrat, généralement réalisé en silicium, via des bras de soutien.

Il est usuellement ménagé dans le substrat des moyens d'adressage séquentiel des détecteurs élémentaires et des moyens d'excitation électrique et de pré-traitement des signaux électriques générés par ces détecteurs élémentaires. Ce substrat et les moyens intégrés sont communément désignés par le terme « circuit de lecture ».

Pour obtenir une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

On observe cependant que la résistance thermique $R_{th}$ des bras de soutien, associée à la capacité calorifique $C_{th}$ d'un bolomètre élémentaire, définit pour celui-ci une constante de temps thermique $\tau_{th}$, égale au produit $R_{th}C_{th}$ et habituellement de l'ordre de la dizaine de millisecondes.

Cette constante de temps thermique propre à chaque bolomètre présente un effet dommageable, qui limite la pénétration des détecteurs bolométriques non refroidis sur le marché de la vision embarquée ou de la poursuite d'objets en mouvement par exemple.

La constante de temps $\tau_{th}$ d'un bolomètre est élevée, ce qui limite son temps de réponse. Ainsi, si la scène est sujette à des variations de contraste rapides, comme par exemple l'intrusion d'un objet de température plus élevée (ou moins élevée) que celle du fond de la scène (on parle alors d'objet « chaud », respectivement « froid »), le bolomètre peine à suivre de telles variations. Il s'en suit que le bolomètre présente une mémoire thermique d'une trame de lecture à la suivante. Le déplacement d'un objet chaud (respectivement froid) dans la scène donnera ainsi lieu à une traînée dans l'image formée.

Cet effet est dommageable de la même manière devant une scène immobile mais qui présente localement des variations rapides de température. Le bolomètre peine également à suivre de telles variations qui sont plus rapides que sa constante de temps, et donc peine à rendre fidèlement la scène.

Par ailleurs, la dispersion de résistance des divers détecteurs élémentaires conduit à une dispersion du courant qui les traverse au cours de la lecture. Il en résulte une dispersion de signal devant une scène uniforme (appelée dispersion « d'offset »), ainsi qu'une dispersion de sensibilité, ou de gain, à une variation de température.

La dispersion de résistance trouve son origine principalement au niveau des dispersions technologiques d'élaboration, ainsi qu'au niveau de la distribution spatiale de température du substrat, et de l'environnement radiatif.

Classiquement, ces dispersions sont compensées par un calcul de correction d'image, dite correction « deux points », hors du plan focal, après acquisition expérimentale des paramètres dispersifs d'offset et de gain.

Afin de pallier de tels inconvénients, une réduction de la constante de temps $\tau_{th}$ des bolomètres peut être tentée.

Toutefois, diminuer la capacité calorifique $C_{th}$ d'un bolomètre est difficile dans la mesure où celle-ci est dépendante de la quantité de matière utilisée pour la fabrication du bolomètre. Or, une diminution de la masse du bolomètre a pour conséquence directe d'augmenter le bruit électrique de celui-ci, puisque la puissance du bruit électrique est liée au volume du bolomètre, au moins lors de la mise en oeuvre de matériaux thermométriques présentant un niveau de bruit basse fréquence non négligeable. Par ailleurs, la stabilité géométrique des structures sensibles ne peut être assurée qu'au-delà d'une quantité de matière structurale suffisante, non réductible à volonté.

Par ailleurs, diminuer la résistance thermique $R_{th}$ ne constitue pas non plus une solution satisfaisante. En effet, cela implique une diminution de l'isolation thermique du bolomètre vis-à-vis du substrat, c'est-à-dire sa sensibilité, car la résistance thermique $R_{th}$ est directement liée à la sensibilité de détection thermique du bolomètre, facteur primordial qui définit la résolution thermique du détecteur bolométrique.

On constate ainsi dans l'état de la technique qu'il est impossible d'obtenir un détecteur bolométrique qui soit à la fois exempt de phénomènes de traînée, et performant en termes de résolution thermique, c'est-à-dire avec un rapport signal/bruit élevé.

Généralement, un détecteur bolométrique de l'état de la technique est conçu pour une application particulière. Usuellement, la constante de temps $\tau_{th}$ d'un tel bolomètre est maximisée par augmentation de $R_{th}$ par construction jusqu'à un niveau de traînée jugé acceptable dans le cadre de cette application.

Le but de la présente invention est d'annuler la dualité défavorable entre la constante de temps des bolomètres et la résolution thermique de ceux-ci.

L'invention a donc pour but de fournir, à l'aide de moyens simples et robustes, des détecteurs bolométriques qui soient sensiblement exempts de phénomènes de traînée tout en étant performants en termes de résolution thermique.

## EXPOSE DE L'INVENTION

A cet effet, l'invention a pour objet un dispositif pour la détection d'un rayonnement infrarouge, comportant un bolomètre résistif d'imagerie destiné à être connecté électriquement à un circuit de mesure d'une résistance de celui-ci.

Selon l'invention, ce dispositif comporte des moyens de commande de la résistance du bolomètre d'imagerie par injection de courant dans celui-ci.

Ainsi, il est possible à l'aide de ces moyens de commande, de régler la résistance du bolomètre sur une valeur prédéterminée de référence au moins une fois pour chaque cycle de lecture de celui-ci. Ceci a pour effet d'annuler la mémoire thermique du bolomètre avant chaque lecture de ce dernier, et donc d'éliminer le phénomène de traînée, ainsi que les effets des variations de résistance parasites sans relation avec la scène.

En effet, en réglant ainsi la résistance du bolomètre sur la valeur de référence, la résistance du bolomètre lue est indépendante des évènements ayant eu lieu jusqu'à la fin du cycle précédent, avant le cycle courant de lecture, et notamment du déroulement de la scène et de la variation thermique du substrat antérieurs.

Cette résistance est également sensiblement indépendante de la position spatiale du bolomètre dans une disposition linéaire ou matricielle.

Par ailleurs, l'invention améliore sensiblement le détecteur au niveau de ses dispersions d'offset et de gain, et permet donc de simplifier sa mise en oeuvre.

Dans ce qui suit, on appelle « bolomètre d'imagerie » un bolomètre sensible au flux de scène incident et destiné à produire un élément d'image thermique de la scène observée.

Selon des modes de réalisations particuliers de l'invention, les moyens de commande de la résistance du bolomètre d'imagerie comprennent des moyens d'injection d'un courant de référence ($I_{ref}$) prédéterminé dans celui-ci.

Ces moyens de commande comprennent avantageusement des moyens de déconnection des moyens d'injection de courant lorsqu'une tension à une borne du bolomètre d'imagerie est sensiblement égale à une tension de référence prédéterminée. Cette tension de référence est elle-même avantageusement réglée à une valeur inférieure à une tension présente aux bornes du bolomètre d'imagerie lors d'une activation des moyens d'injection de courant, et lorsque le courant est sensiblement égal au courant de référence $I_{ref}$

Selon un mode de réalisation particulier de l'invention, les moyens de commande sont aptes à fixer la résistance du bolomètre d'imagerie sur une résistance de référence dépendante de la température du substrat au dessus duquel est formé le bolomètre d'imagerie.

Plus particulièrement, les moyens de commande comportent un amplificateur contre-réactionné par un bolomètre thermalisé au substrat, la sortie de l'amplificateur formant une correction d'une résistance de référence initiale déterminée pour une température initiale prédéterminée.

En variante, les moyens de commande comprennent un capteur de température du substrat et une unité de traitement d'informations (28) apte à déterminer, en fonction de la mesure de température, une correction d'une résistance de référence initiale déterminée pour une température initiale prédéterminée.

Ainsi, en commandant la thermalisation en fonction de la température du plan focal, la valeur courante de la résistance de référence à laquelle sont portés tous les bolomètres d'imagerie reste constamment positionnée comme il convient, c'est-à-dire préférentiellement au voisinage de la valeur minimale de la distribution naturelle des résistances des bolomètres d'imagerie, et cela quelle que soit la température du plan focal.

On notera en outre que les formes de circuits utilisés pour la commande en température de la résistance de référence, qu'elles soient analogiques ou numériques, permettent non seulement de maintenir le positionnement adéquat de la thermalisation lorsque la température opératoire évolue, mais aussi d'assurer ce positionnement adéquat lorsque les résistances des bolomètres évoluent en elles-mêmes au cours du temps, à température constante. En effet, les matériaux sensibles intégrés dans les membranes bolométriques présentent une tendance à dériver très lentement au cours de la vie du détecteur. Cette dérive limite au fil du temps la pertinence des réglages de stimuli initiaux même si le détecteur fonctionne à une température constante stabilisée.

L'invention a également pour objet un système de détection d'un rayonnement infrarouge comportant une matrice d'au moins une ligne de dispositifs comportant chacun :

- un bolomètre résistif d'imagerie ;
- et un circuit de mesure apte à être connecté électriquement au bolomètre d'imagerie pour une lecture d'une résistance de celui-ci.

Selon l'invention, ces dispositifs sont chacun du type susmentionné.

Selon l'invention, les moyens de commande de la résistance du bolomètre d'imagerie sont aptes à régler celle-ci sur une valeur prédéterminée de résistance commune pour tous les bolomètres d'imagerie de ladite matrice.

Avantageusement, les moyens de commande de la résistance du bolomètre d'imagerie sont activés après chaque lecture de celui-ci.

En outre, le système peut comprendre des moyens de commande d'une dynamique thermique d'une scène détectée par la matrice en fonction d'une dynamique électrique de scène accessible par le système en fonction d'une dynamique prédéterminée du circuit de lecture. Ces moyens de commande de la dynamique de la scène détectée comprennent des moyens aptes à activer le circuit de lecture une fois écoulée une durée prédéterminée d'exposition depuis une désactivation des moyens de commande de la résistance du bolomètre d'imagerie.

Dans ce cas de figure, la durée d'exposition est sélectionnée pour que la dynamique de la scène détectée soit inférieure ou égale à une dynamique correspondante du circuit de lecture.

Selon un mode particulier de réalisation de l'invention :

- le circuit de lecture est apte à lire la matrice ligne par ligne,
- les moyens de commande de la résistance du bolomètre sont aptes à commander la matrice ligne par ligne,
- et le système comporte en outre des moyens de cadencement de la lecture et de la commande de la résistance du bolomètre, de sorte que la lecture d'une ligne de la matrice soit décalée d'un nombre prédéterminé de lignes de la commande des résistances d'une ligne de la matrice.

Selon une autre caractéristique avantageuse de l'invention, le système de détection comporte un circuit de commande de résistance associé à chaque bolomètre d'imagerie de la matrice bolométrique et apte à commander la résistance de celui-ci.

Alternativement, ledit système comporte un circuit de commande de résistance associé à chaque colonne de la matrice et apte à commander la résistance de chaque bolomètre de cette colonne.

La présente invention a également pour objet un procédé de lecture d'un bolomètre résistif d'imagerie d'une matrice de bolomètres constitutive d'un système de détection d'un rayonnement infrarouge, dans lequel la résistance de celui-ci est réglée sur une valeur prédéterminée de résistance commune pour tous les bolomètres de la matrice au moins une fois par cycle de lecture de celui-ci.

BREVE DESCRIPTION DES FIGURES

L'invention sera mieux comprise à la lecture de la description qui va suivre, donnée uniquement à titre d'exemple, et réalisée en relation avec les dessins annexés dans lesquels des références identiques se rapportent à des éléments identiques ou analogues, et dans lesquels :

- la figure 1 est une vue schématique d'un détecteur bolométrique selon l'invention ;
- la figure 2 est une vue schématique d'un agencement d'un bolomètre d'imagerie, d'un circuit de compensation, d'un circuit de mesure et d'un circuit de thermalisation entrants dans la constitution du détecteur de la figure 1 ;

- la figure 3 est un organigramme du fonctionnement du détecteur de la figure 1 ;
- la figure 4 est un tracé illustrant l'évolution temporelle de la distribution des niveaux de sortie d'une ligne du détecteur de la figure 1 disposé devant une scène à haute dynamique de température ; et
- la figure 5 est une vue schématique d'un détecteur bolométrique selon un mode de réalisation particulier de l'invention.

## DESCRIPTION DETAILLEE DE L'INVENTION

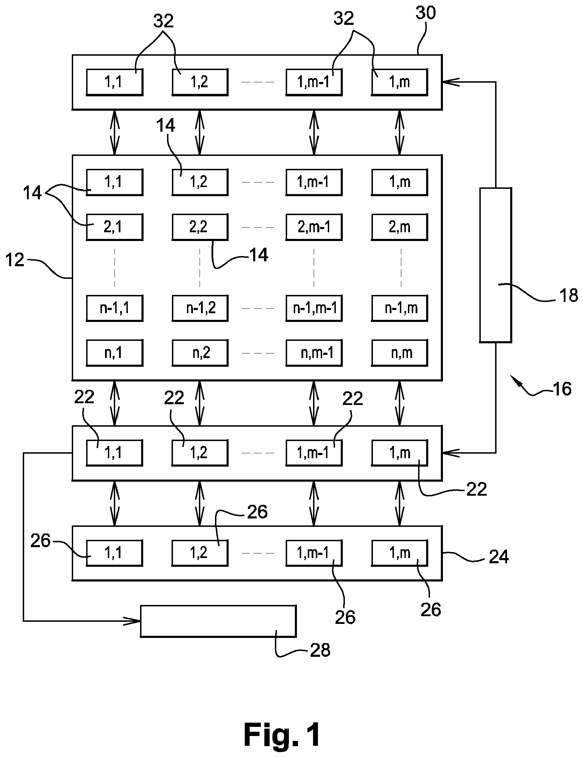

On a illustré schématiquement sur la figure 1 un détecteur bolométrique qui comprend :

- une matrice bidimensionnelle **12** d'imagerie comprenant $\underline{n}$ lignes et $\underline{m}$ colonnes de bolomètres résistifs d'imagerie **102**, où $\underline{n}$ et $\underline{m}$ sont des entiers supérieurs ou égaux à 1. La matrice d'imagerie **12** est agencée dans le plan focal d'une optique transparente aux infrarouges (non représentée) ;
- un circuit de lecture **16** réalisé dans un substrat sous la surface de la matrice d'imagerie **12**. Le circuit de lecture **16** comprend un circuit d'adressage ligne par ligne **18** et, pour chaque colonne de la matrice d'imagerie **12**, un circuit de mesure **22** apte à être connecté à chaque bolomètre d'imagerie de leur colonne par des moyens électriques ;
- une matrice de bolomètres de compensation **24** comprenant un ou plusieurs circuits de compensation **26** disposés en regard de chaque colonne de la matrice d'imagerie **12**, mais au-delà du format de la matrice d'imagerie. La matrice **24** comporte par exemple, pour chaque colonne de la matrice d'imagerie **12**, un circuit de compensation **26** apte à être connecté à chaque bolomètre d'imagerie de la colonne ; et
- une unité de traitement d'informations **28** connectée au circuit de lecture **16** et mettant en oeuvre un algorithme de traitement des signaux délivrés par celui-ci pour déterminer une image infrarouge de la scène projetée sur la matrice **12**.

Une telle structure de détecteurs bolométriques est classique et ne sera pas expliquée plus en détail par la suite. Pour de plus amples informations, on pourra utilement se reporter par exemple au document « Uncooled amorphous silicon enhancement four $25\mu$m pixel pitch achievement » de E. Mottin et al, Infrared Technology and Application XXVIII, SPIE, vol. 4820.

Selon l'invention, cette structure de détecteur est complétée par un circuit d'obturation thermique **30** de la matrice de bolomètres d'imagerie **12**, sous le contrôle des moyens d'adressage **18**, et formé de circuits de thermalisation, ou autrement dit, de commande de résistance **32** de la matrice **12** ligne par ligne, comme cela sera expliqué plus en détail ci-dessous. Le circuit d'obturation **30** comporte, pour chaque colonne de la matrice d'imagerie **12**, un circuit de thermalisation **32** apte à être connecté à chaque bolomètre d'imagerie de la colonne.

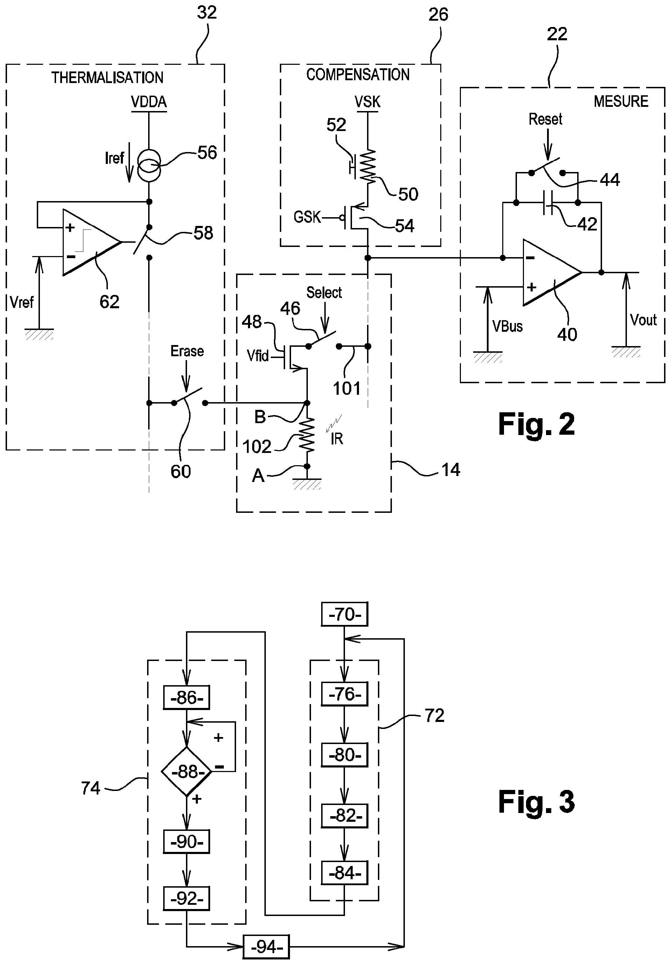

Sur la figure 2, on a illustré un agencement élémentaire préféré :

- d'un point élémentaire d'image **14**, composé d'un bolomètre d'imagerie **102** de la matrice **12** et des éléments **46** et **48** nécessaires à sa mise en oeuvre ;
- d'un circuit de mesure **22** du circuit de lecture **16** pour la mesure du bolomètre d'imagerie **102** ;
- d'un circuit de compensation **26** de la matrice **24** pour la compensation d'un courant de mode commun circulant dans le bolomètre d'imagerie **102** lors de la lecture de celui-ci ; et
- d'un circuit de thermalisation **32** du circuit d'obturation thermique **30** pour la thermalisation du bolomètre d'imagerie **102**.

Le bolomètre **102** est soumis à un rayonnement infrarouge IR issu d'une scène et est connecté à la masse par une première borne **A**.

Le circuit de mesure **22** comprend :

- un amplificateur opérationnel **40**, dont la borne non inverseuse (+) est mise à une tension constante *Vbus* prédéterminée ;
- un condensateur **42**, de capacité $C_{int}$ prédéterminée, connecté entre une borne inverseuse (-) de l'amplificateur **40** et la sortie de celui-ci ;
- un interrupteur de remise à zéro **44** connecté en parallèle du condensateur **42** et pilotable au moyen d'un signal « Reset » commandé par le circuit d'adressage **18** ;
- un interrupteur **46** de lecture, pilotable au moyen d'un signal « Select » commandé par le circuit d'adressage **18**, et connecté à la colonne de lecture **101**, elle-même connectée à la borne inverseuse (-) de l'amplificateur opérationnel ; et
- un premier transistor MOS **48** d'injection situé dans le point élémentaire **14**, dont la grille est mise à une tension *Vfid* constante prédéterminée, dont la source est connectée à une seconde borne **B** du bolomètre **102**, et dont le drain est connecté à l'autre borne de l'interrupteur **46** de lecture.

Le circuit de compensation **26** du courant de mode commun traversant le bolomètre d'imagerie **102** comprend un bolomètre résistif de compensation **50** réalisé dans le même matériau que le bolomètre d'imagerie **102**, présentant une faible résistance thermique vers le substrat et pourvu, de manière optionnelle, d'un écran **52** contre le rayonnement issu de la scène.

Le bolomètre de compensation **50** est connecté à l'une de ses bornes à une tension prédéterminée *VSK* et à l'autre de ses bornes à la source d'un second transistor MOS d'injection **54** du circuit **26**. Le drain du transistor **54** est connecté à l'entrée inverseuse (-) de l'amplificateur opérationnel **40** et la grille est connectée à une tension prédéterminée *GSK*.

L'agencement et le fonctionnement des éléments venant d'être décrits est classique et ne seront donc pas expliqués plus en détail pour des raisons de concision. Pour de plus amples détails, on pourra par exemple se référer au document « Uncooled amorphous silicon enhancement for $25\mu$m pixel pitch achievement » de E. Mottin et al, Infrared Technology and Application XXVIII, SPIE, vol. 4820.

Selon l'invention, il est prévu le circuit de thermalisation **32** apte à commander la résistance du bolomètre d'imagerie **102**.

Plus particulièrement, le circuit de thermalisation **32** comprend une source de courant **56** connectée à la borne **B** du bolomètre d'imagerie **102** au travers d'un premier et d'un second interrupteurs de thermalisation pilotables **58**, **60**, ce dernier étant déporté dans le point d'imagerie élémentaire **14**. La source de courant **56** injecte dans le bolomètre d'imagerie **102** un courant d'intensité prédéterminée $I_{ref}$ lorsque les interrupteurs de thermalisation **58**, **60** sont dans leur état fermé.

Le circuit de thermalisation **32** comporte également un comparateur **62**, dont une première borne est connectée, par exemple au travers des interrupteurs de thermalisation **58**, **60**, à la borne **B** du bolomètre d'imagerie **102**, et dont une seconde borne est connectée à une tension de référence prédéterminée $V_{ref}$.

Le comparateur **62** est par ailleurs connecté au premier interrupteur de thermalisation **58**, dont il pilote l'état en fonction du résultat de la comparaison entre la tension $V_B$ de la borne **B** du bolomètre d'imagerie **102** et la tension de référence $V_{ref}$.

Enfin, l'état du second interrupteur de thermalisation **60** est piloté au moyen d'un signal d'effacement « Erase » par le circuit d'adressage **18**.

Un procédé de thermalisation et de lecture de la matrice d'imagerie **12** va maintenant être décrit en relation avec la figure 3.

Dans une première étape **70**, par exemple déclenchée après avoir mis sous tension le détecteur bolométrique **10** :

- un pointeur de lecture $N_{lect}$ du circuit d'adressage **18** est initialisé à 1 ;
- une valeur de $V_{ref}$ et une valeur de $I_{ref}$ sont sélectionnées, d'une manière qui sera expliquée plus en détail par la suite ;
- les signaux « Reset », « Select » et « Erase » associé à chaque bolomètre d'imagerie **102** de la matrice **12** sont réglés par le circuit d'adressage **18** sur zéro, valeur qui correspond à l'état ouvert des interrupteurs **44**, **46**, **60**.

L'étape **70** se poursuit alors par une macro étape **72** de lecture de la ligne $N_{lect}$ de la matrice **12**.

L'étape **72** de lecture comporte une étape **76** de réglage du signal « Reset » des circuits de mesure **22** par le circuit d'adressage **18** sur une valeur positive, de manière à fermer les interrupteurs de remise à zéro **44**. Les condensateurs **42** de la ligne $N_{lect}$ sont donc déchargés quasi instantanément.

L'étape **76** se poursuit par une étape **80** dans laquelle les signaux « Reset » sont basculés sur zéro par le circuit d'adressage **18** de manière à ouvrir les interrupteurs de remise à zéro **44**. Parallèlement, toujours en **80**, les signaux « Select » sont basculés par le circuit d'adressage **18** sur une valeur positive de manière à fermer les interrupteurs de lecture **46** de la ligne $N_{lect}$.

Ainsi pour chaque agencement décrit à la figure 2 de la ligne $N_{lect}$, la différence entre le courant traversant le bolomètre d'imagerie **102** et le courant traversant le bolomètre de compensation **50** est alors intégrée par le condensateur **42**.

Comme le courant traversant le bolomètre de compensation **50** est sensiblement égal au courant de mode commun traversant le bolomètre d'imagerie **102**, la différence de courant en entrée du circuit de mesure **22** correspond alors sensiblement à une variation $\Delta R_{bolo}$ de la résistance $R_{bolo}$ du bolomètre d'imagerie **102** induite par le rayonnement issu de la scène et incident sur celui-ci.

Lors d'une étape suivante **82**, la différence de courant à l'entrée du circuit **22** est intégrée pendant une durée Tint dans la capacité **42**.

Une fois le temps d'intégration écoulé, le circuit d'adressage **18** bascule, en **84**, la valeur des signaux « Select » de la ligne $N_{lect}$ sur zéro, de manière à ouvrir les interrupteurs de lecture **46** correspondants. A l'issue de l'étape **84**, tous les signaux « Select » et « Reset » sont à zéro. Les interrupteurs respectifs sont donc ouverts.

La tension $V_{out}$ en sortie d'un intégrateur **42** est alors l'image de la variation de résistance $\Delta R_{bolo}$ du bolomètre d'imagerie **102** associé.

La macro-étape **74** de thermalisation de la ligne $N_{lect}$ qui suit l'étape **84**, comprend quant à elle une étape **86** dans laquelle les signaux « Erase » de cette ligne sont basculés sur une valeur positive par le circuit d'adressage **18** de manière à fermer les interrupteurs de thermalisation **60** de cette ligne.

On notera qu'à cet instant, les interrupteurs de lecture **46** de la ligne $N_{lect}$ sont dans leur état ouvert.

Dans chaque agencement, tels qu'illustrés à la figure 2, de la ligne $N_{ther}$, le bolomètre d'imagerie **102** est ainsi polarisé par l'injection dans celui-ci du courant $I_{ref}$ et subit donc un échauffement par effet joule.

Dans le cas des matériaux semiconducteurs classiquement utilisés pour réaliser un bolomètre d'imagerie, comme par exemple du silicium amorphe ou un oxyde de vanadium, le coefficient thermique du matériau est négatif et la résistance $R_{bolo}$ du bolomètre d'imagerie **102** évolue selon une loi d'Arrhenius selon la relation

$$R_{bolo} = R_{abs} \, . \, exp(Ea/K.T) \quad (1)$$

où :

- $Ea$ est une énergie d'activation thermique de la conductivité du matériau utilisé pour la formation du bolomètre ;
- $K$ est la constante de Boltzmann ;
- $T$ est la température absolue du bolomètre ; et
- $R_{abs}$ est la valeur asymptotique de la résistance du bolomètre lorsque l'échauffement de celui-ci est très élevé.

Le coefficient de variation relative en température de la résistance $R_{bolo}$ qui découle de la relation (1) est exprimé par :

$$TCR = 1/R \, (dR/dT) = -Ea/(K \, T^2)$$

Cette grandeur est donc négative, la résistance $Rb$ diminue lorsque la température augmente.

Lors d'une étape suivante **88**, un test est mis en oeuvre pour déterminer si la résistance $R_{bolo}$ du bolomètre d'imagerie **102** est sensiblement égale à une résistance prédéterminée $R_{ref}$. Si le résultat de ce test est négatif, la thermalisation du bolomètre d'imagerie **102** se poursuit. Sinon, l'étape de test **88** se termine par l'arrêt de la thermalisation du bolomètre d'imagerie **102** par la déconnexion, en **90**, de la source de courant **56** correspondante.

Plus particulièrement, les étapes **88** et **90** sont mises en oeuvre par le comparateur **62**.

Selon la loi d'Ohm, la tension $V_{bolo}$ aux bornes du bolomètre d'imagerie **102** s'exprime selon la relation :

$$V_{bolo} = V_B = R_{bolo} \times I_{ref} \qquad (2)$$

Le comparateur **62** bascule alors le second interrupteur de thermalisation **58** dans son état ouvert, déconnectant ainsi la source de courant **56** du bolomètre d'imagerie **102**, lorsque la tension $V_{ref}$ est sensiblement égale à $V_B$, c'est-à-dire lorsque $R_{bolo}$ vérifie la relation :

$$R_{bolo} = R_{ref} = \frac{V_{ref}}{I_{ref}} \qquad (3)$$

La thermalisation du bolomètre d'imagerie **102** est ainsi terminée.

On notera que la résistance $R_{ref}$ que présente le bolomètre d'imagerie **102** en fin de thermalisation est indépendante de la quantité de rayonnement infrarouge reçu par le celui-ci.

On peut en effet montrer à partir de la relation (1) que l'échauffement $\theta$ subi par le bolomètre d'imagerie **102** au moment de la déconnexion de la source de courant **56** par le comparateur **62** s'approxime selon la relation :

$$\theta = \frac{1}{TCR} \times \ln\left(\frac{V_{ref}}{R_0 \times I_{ref}}\right) \qquad (4)$$

Comme on peut le constater, cet échauffement ne dépend pas du rayonnement infrarouge reçu, mais uniquement de paramètres internes au bolomètre d'imagerie **102** ainsi que de paramètres du circuit de thermalisation **32**, à savoir le courant $I_{ref}$ et la tension $V_{ref}$.

L'étape de thermalisation de la ligne $N_{lect}$ se termine enfin par une étape **92**, au cours de laquelle le circuit d'adressage **18** bascule les signaux « Erase » de cette ligne sur zéro afin d'ouvrir les interrupteurs de thermalisation **60** correspondants.

L'étape **74** de lecture et de thermalisation se poursuit ensuite par une étape **94**, déclenchée une fois celle-ci terminée, dans laquelle la valeur du pointeur de lecture $N_{lect}$ est réglée sur $N_{lect}$ +1 (mod$n$), où mod est l'opérateur modulo. En effet, une fois $N_{lect} = n$ , la prochaine étape sera $N_{lect} = 1$.

L'étape **94** boucle alors en entrée de l'étape **72** pour la lecture des lignes suivantes.

Les valeurs du courant $I_{ref}$ et de la tension $V_{ref}$ sont sélectionnées lors de l'étape **70** de manière à ce que :

- la durée d'échauffement nécessaire pour que la résistance $R_{bolo}$ d'un bolomètre d'imagerie atteigne la valeur $R_{ref}$ soit la plus faible possible. Ainsi, le cadencement des signaux « Reset » et « Select » de l'état de la technique peut être conservé ;
- la valeur de $V_{ref}$ soit inférieure à la tension $V_B$ de la borne **B** du bolomètre d'imagerie **102** lors du déclenchement de la thermalisation de celui-ci. Ainsi, la condition de commutation du comparateur **62** associé n'est pas d'emblée satisfaite. Dans le cas contraire, la thermalisation du bolomètre de référence **26** serait inhibée.

Les valeurs du courant $I_{ref}$ et de la tension $V_{ref}$ sont déterminées lors d'une phase préliminaire, par exemple en usine pendant la phase de calibration du détecteur classiquement mise en oeuvre avant la mise en service de celui-ci. Une telle phase préliminaire comporte notamment les étapes suivantes :

a) le détecteur est mis en route et soumis à des conditions d'environnement thermique de référence prédéterminées, à savoir une température connue et stable de son plan focal et des conditions radiatives uniformes en provenance de la scène, obtenues typiquement par exposition devant un corps noir porté à la température maximale qu'est supposé détecter le détecteur lors de son utilisation,

b) les bolomètres d'imagerie **102** sont soumis à un courant $I_{ref}$ de valeur proche de celle utilisée pour polariser les bolomètres d'imagerie lors de la phase de lecture de ceux-ci, ainsi qu'à une tension $V_{ref}$ de comparaison élevée, par exemple sensiblement égale à la tension $VDDA$. A ce stade, les résistances des bolomètres d'imagerie **102** ne sont pas modifiées par les circuits de thermalisation **32**, et les tensions $V_{out}$ correspondantes en sortie des circuits de mesure **22** correspondent donc à la distribution classique des niveaux de sortie continu des bolomètres d'imagerie **102** illuminés par une scène uniforme, c'est-à-dire la dispersion dite « d'offset » ;

c) la tension $V_{ref}$ est ensuite progressivement diminuée. Un phénomène d'écrêtage apparaît alors dans les basses valeurs de la distribution des tensions $V_{out}$ lorsque les résistances des bolomètres d'imagerie les plus résistifs sont thermiquement modifiées par les circuits de thermalisation 32 du fait de la baisse progressive de la tension $V_{ref}$. La diminution de la tension $V_{ref}$ est stoppée lorsque sensiblement toutes les tensions $V_{out}$ sont modifiés à la hausse et proches de la tension $V_{out}$ la plus élevée observée avant la diminution de la tension $V_{ref}$ ;

d) le courant $I_{ref}$ et la tension $V_{ref}$ ainsi obtenus sont alors utilisés pour la thermalisation des bolomètres d'imagerie **102** lors de l'utilisation du détecteur.

Le processus de réglage du courant $I_{ref}$ et de la tension $V_{ref}$ venant d'être décrit peut être réalisé de manière manuelle ou de manière automatique. Dans ce dernier cas, le processus est mis en oeuvre par l'unité de traitement d'informations **28** qui produit en sortie les niveaux numériques de commande $I_{ref}$ et $V_{ref}$, lesquels sont traduits ensuite en courant et en tension analogiques par des moyens classiques de conversion numérique-analogique. L'unité de traitement d'informations **28** met alors en oeuvre, par voie logicielle par exemple, une exploitation des tables de niveau continu correspondant aux tensions $V_{out}$ formées à chaque étape de décrémentation de la tension $V_{ref}$.

On notera que pour obtenir la résistance $R_{ref}$ souhaitée, il existe une infinité de couples ($I_{ref}$, $V_{ref}$) possibles. Le choix d'un courant $I_{ref}$ proche du courant de polarisation traversant les bolomètres d'imagerie **102** sous l'effet de la polarisation par les transistors **48** associés lors de la phase de lecture est cependant préféré, dans la mesure où le temps de thermalisation de ceux-ci qui en résulte est compatible avec les contraintes temporelles auxquelles est par ailleurs soumis le détecteur (temps d'intégration notamment). Cependant, un courant $I_{ref}$ plus élevé peut être préféré pour réduire la durée de thermalisation conduisant à la résistance $R_{ref}$. De préférence, le courant $I_{ref}$ est constant et appliqué directement à l'aide d'éléments de circuiterie traditionnels analogiques, ce qui simplifie la conception des circuits de thermalisation.

Dans le mode de réalisation précédemment décrit, les macro-étapes de lecture et de thermalisation, respectivement **72** et **74**, s'enchaînent. La matrice est ainsi adressée, lue puis thermalisée ligne après ligne.

Dans un autre mode de réalisation, un second pointeur $N_{ther}$ est introduit, adressant la ligne correspondante, afin de thermaliser une ligne différente de la ligne lue.

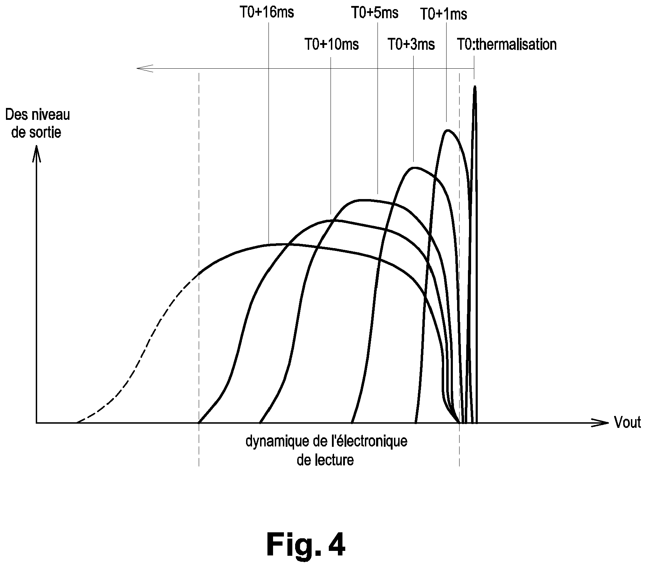

Le nombre de lignes $N_{exp}$ séparant la lecture de la thermalisation est avantageusement sélectionné pour commander la dynamique de la scène détectée par la matrice d'imagerie **12**, comme cela est illustré sur la figure 4.

Sur la figure 4, il est tracé une série temporelle de distributions des niveaux de sortie de la population de bolomètres d'imagerie **102** d'une ligne N de la matrice **12** (ou de la matrice 12 entière après accumulation des distributions des M lignes) Chaque distribution correspond à un temps d'attente différent entre la thermalisation et la lecture. La figure 4 illustre le cas où la dynamique thermique de la scène observée excède largement la dynamique de scène du détecteur en l'absence du dispositif de thermalisation selon l'invention, qu'on appellera dynamique de scène référence.

A t = T0, la ligne N subit une thermalisation, comme cela a été décrit précédemment. La dispersion en population des températures des bolomètres est alors très faible. Cette dispersion est principalement inhérente à la dispersion naturelle dans la construction du détecteur, les bolomètres d'imagerie et les connexions entre les divers éléments du détecteur n'étant pas strictement identiques.

On notera que la durée de thermalisation d'un bolomètre est très sensiblement inférieure à sa durée d'exposition, c'est-à-dire la durée séparant sa thermalisation de sa lecture. A titre d'exemple numérique, la durée d'exposition est de l'ordre de la dizaine de millisecondes alors que la durée de thermalisation est de l'ordre de la dizaine de microsecondes.

Une fois la thermalisation terminée, les bolomètres d'imagerie de la ligne N se refroidissent. Chaque bolomètre d'imagerie a sa propre vitesse de refroidissement en fonction du rayonnement thermique qu'il reçoit (de la température de l'élément de scène qui le concerne). On observe un étalement progressif en fonction du temps, de la distribution du signal formé par la ligne N lorsqu'on la lit à la fin du temps d'exposition, induite par la distribution des températures respectives des bolomètres de cette ligne. La différence de température entre le bolomètre le plus froid et le bolomètre le plus chaud de la ligne N, augmente donc avec le temps, ainsi que la différence des niveaux de sortie extrêmes correspondants, comme illustré sur la figure 4.

Au-delà d'une durée d'exposition de l'ordre de quelques constantes de temps thermique des bolomètres, la distribution se stabilise progressivement à l'équilibre thermique et ne s'élargit plus.

Par ailleurs, le circuit de mesure **22** présente lui-même une dynamique de lecture fixe, définie comme la différence entre les tensions maximale et minimale que peut délivrer la sortie des amplificateurs opérationnels **40**. Une telle dynamique est illustrée entre les deux lignes pointillées.

Comme on peut le constater, dans l'hypothèse retenue ou la scène présente une dynamique supérieure à la dynamique de référence, si une durée d'exposition trop importante s'écoule entre la thermalisation de la ligne N et sa lecture, par exemple 16 millisecondes, la distribution des signaux de sortie est écrêtée par la dynamique de lecture. Une partie importante des bolomètres d'imagerie, correspondant à des températures froides, ne peut pas être lue de manière représentative par le circuit de lecture du détecteur.

Le détecteur selon l'invention permet d'adapter la dynamique de scène sensible par le détecteur par ajustement du temps d'exposition.

De manière avantageuse, la lecture de la ligne N est déclenchée avant que la dynamique électrique de sortie induite par la scène ne soit plus importante que la dynamique du circuit de lecture, par le choix approprié du nombre de lignes $N_{exp}$, où $N_{exp}$ est le nombre de lignes séparant le pointeur de thermalisation $N_{ther}$ du pointeur de lecture $N_{lect}$.

Il s'écoule en effet une durée d'exposition $T_{exp} = \dfrac{N_{exp}}{F_{ligne}}$, où $F_{ligne}$ est une fréquence d'adressage prédéterminée du circuit d'adressage **18**, entre la lecture et la thermalisation de la ligne N. Cette durée est donc pilotable par le choix de $N_{exp}$.

De manière préférée, le temps d'exposition $T_{exp}$ est choisi de façon à ce que la dynamique de l'image en sortie induite par la scène soit inférieure ou égale à celle de la lecture.

Si la température du plan focal dérive sensiblement de la température pour laquelle le courant courant $I_{ref}$ et de la tension $V_{ref}$, et donc la résistance $R_{ref}$, ont été déterminés, il existe un risque, pour les températures de scène aux marges de la dynamique initialement définie, de voir la résistance $R_{ref}$ être sensiblement plus faible que la résistance la plus faible des bolomètres d'imagerie **102** à l'équilibre thermique, ou bien de rencontrer des difficultés pour imposer la résistance $R_{ref}$ à quelques bolomètres, voire à l'ensemble des bolomètres, à l'issue de la phase de thermalisation.

Dans une première variante, le détecteur est équipé d'éléments de régulation de la température du plan focal du type Peltier et/ou des éléments de chauffage du plan focal afin de réguler la température de celui-ci autour de la température utilisée pour réaliser le réglage du courant $I_{ref}$ et de la tension $V_{ref}$.

Dans une seconde variante, le détecteur est équipé d'un capteur mesurant la température du plan focal et un étalonnage préalable de tensions $V_{ref}$ dans le cas d'un courant $I_{ref}$ choisi constant, ou de couples courant/tension ($I_{ref}$, $V_{ref}$), est interrogée en fonction de la mesure de température pour déterminer le couple de courant/tension utilisé.

Ces variantes supposent donc, soit un détecteur régulé en température et nécessitant ainsi un équipement spécifique couteux et encombrant, soit la détermination longue et coûteuse d'un étalonnage en usine.

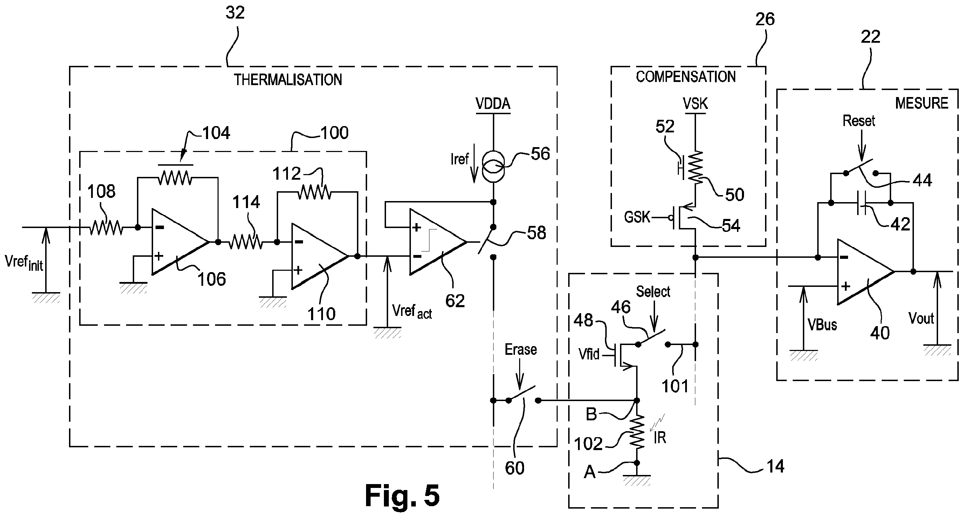

La figure 5 illustre un mode de réalisation selon l'invention permettant d'insensibiliser la dynamique de scène des variations de la température du plan focal tout en évitant l'emploi d'éléments de régulation thermique ou l'acquisition d'un étalonnage en température.

Selon ce mode de réalisation, le courant $I_{ref}$ est choisi constant et la tension $V_{ref}$ est commandée en fonction de la température du plan focal dans lequel se situe le substrat.

Le module de thermalisation **32** selon ce mode de réalisation reproduit le circuit décrit en relation avec la figure 2, mais comprend en outre un circuit **100** de commande de la tension $V_{ref}$ appliquée à l'entrée inverseuse (-) du comparateur **62**. Pour un détecteur matriciel, ce circuit **100** est typiquement unique, disposé par exemple en bout de la ligne des circuits de thermalisation **32**, et sa sortie définit le potentiel d'un bus de distribution de la tension $V_{ref}$ vers chaque colonne, comme schématisé sur la figure 5.

Le circuit de commande **100** comporte un bolomètre **104**, identique ou similaire aux bolomètres de compensation **50**, de résistance $R_{sonde}$ et branché en contre-réaction d'un amplificateur opérationnel **106** entre la borne inverseuse (-) et la sortie de celui-ci, et une résistance fixe **108**, connectée entre la borne inverseuse (-) de l'amplificateur **106** et une tension de référence initiale $V_{ref-init}$.

Le bolomètre **104** est insensibilisé au rayonnement de la scène de sorte que la valeur de sa résistance dépend essentiellement de la température du substrat.

Le courant $I_{ref}$ et la tension $V_{ref-init}$ sont déterminés pour une température du plan focal prédéterminée lors d'une étape de réglage telle que décrite précédemment et la valeur $R_{sonde-init}$ de la résistance **108** sensiblement égale à celle à la résistance du bolomètre **104** lorsque celui-ci est soumis aux conditions thermiques utilisées lors de cette étape de réglage. Le rapport ($R_{sonde}$ / $R_{sonde-init}$) définit le gain de la correction apporté à la tension initiale $V_{ref-init}$.

Le circuit de commande **100** comporte également, pour inverser la polarité en sortie de l'amplificateur **106**, un amplificateur opérationnel **110** contre-réactionné par une résistance fixe **112** entre sa borne inverseuse (-) et sa sortie, et une résistance fixe **114** de même valeur que la résistance **112**, connectée entre la sortie de l'amplificateur **106** et la borne inverseuse (-) de l'amplificateur **110**. La sortie de ce dernier est connectée à la borne non inverseuse (+) du comparateur **62**, définissant ainsi la tension $V_{ref-act}$ utilisée pour la thermalisation du bolomètre d'imagerie **102**.

Ainsi, le comparateur **62** est référencé en continu à la tension $V_{ref-act}$ selon la relation :

$$V_{ref-act} = V_{ref-init} \times \frac{R_{sonde}}{R_{sonde-init}} \qquad (5)$$

La valeur $R_{sonde}$ de la résistance du bolomètre **104** étant essentiellement dictée par la température du substrat, la correction relative de la tension $V_{ref}$ fournie au comparateur **62** est donc égale à la variation relative attendue de la résistance $R_{ref}$ induite par la variation de température du substrat, par rapport à la résistance $R_{ref-init}$ retenue pour déterminer la tension $V_{ref-init}$ à la température initiale. Ainsi, l'application du processus de thermalisation impose pour tous les bolomètres d'imagerie une valeur de résistance actualisée $R_{ref-act}$ adaptée à la température courante du plan focal.

En d'autres termes, la tension $V_{ref-act}$ en sortie du circuit de commande **100**, qui se comporte comme un « suiveur de température », reproduit proportionnellement et naturellement les variations de résistance de la sonde bolométrique **104**, laquelle répond aux variations de température du substrat, sans qu'il soit requis de connaître ladite température, et se maintient continuellement au voisinage du point idéal de fonctionnement qui aura été initialement choisi lors de la phase préliminaire de réglage.

Alternativement, plutôt qu'une commande de la tension $V_{ref-act}$ en fonction de la température, une commande selon le même principe du courant $I_{ref}$ est mise en oeuvre.

Dans un autre mode de réalisation, la consigne de tension appliquée au comparateur **62** du circuit de thermalisation est déterminée de manière numérique par l'unité **28** de traitement d'information en fonction d'une mesure de la température du substrat par une sonde de température, le courant $I_{ref}$ restant par ailleurs constant.

L'unité **28** de traitement d'informations fournit ainsi une consigne de tension de référence actualisée $V_{ref-act}$

selon la relation :

$$V_{ref\text{-}act} = V_{ref\text{-}init} \, . \, exp \, [Ea.(1/T - 1/T_{ref})] \qquad (6)$$

où $V_{ref\text{-}init}$ est la tension initialement définie comme décrit précédemment, $T$ est la température fournie par la sonde à l'instant considéré et $T_{ref}$ est la température fournie par la sonde lors du réglage initial, correspondant à la tension $V_{ref\text{-}init}$.

Les bolomètres d'imagerie **102** sont ainsi thermalisés à la résistance $R_{ref-act} = \dfrac{V_{ref-act}}{I_{ref}}$ et donc en fonction de la température courante du substrat.

La relation d'Arrhenius selon la relation (6) n'est qu'un cas typique, car l'objet générique de ce mode de réalisation est de calculer la tension $V_{ref\text{-}act}$ selon un modèle numérique apte à produire l'actualisation de $V_{ref}$ la mieux adaptée au maintien des conditions optimales de fonctionnement selon la température du substrat. Ce peut être une autre relation, définie par exemple par ajustement à un étalonnage empirique du comportement de la résistance du bolomètre d'imagerie en fonction de la température du substrat, pour les conditions de scène correspondant au réglage initial.

Alternativement, c'est le courant $I_{ref}$ qui est commandé en fonction de la température du substrat selon une estimation du même type que la relation (6) alors que la tension $V_{ref}$ est gardée constante.

En commandant la thermalisation en fonction de la température du plan focal, la valeur courante de la résistance de référence à laquelle sont portés tous les bolomètres d'imagerie reste constamment positionnée comme il convient, c'est-à-dire au voisinage de la valeur minimale de la distribution naturelle des résistances des bolomètres d'imagerie lorsque le détecteur observe une scène uniforme à la température maximale de sa dynamique de scène, et cela quelle que soit la température du plan focal.

En d'autres termes, le détecteur selon ces variantes présente une dynamique de scène au premier ordre indépendante des dispersions naturelles des résistances des bolomètres d'imagerie, quelle que soit la température du plan focal. Or la dynamique de scène des détecteurs selon l'état de l'art est au premier ordre limitée, du côté des températures de plan focal élevées, par ces dispersions naturelles de résistances. Il résulte donc de la mise en oeuvre du détecteur selon ces variantes de l'invention un gain substantiel de dynamique, en sus des avantages déjà exposés.

On notera que les formes de circuits utilisés pour la commande en température de la résistance de référence, qu'elles soient analogiques ou numériques, permettent non seulement de maintenir le positionnement adéquat de la thermalisation lorsque la température opératoire évolue, mais aussi d'assurer ce positionnement adéquat lorsque les résistances des bolomètres évoluent en elles-mêmes au cours du temps, à température constante. En effet, les matériaux sensibles intégrés dans les membranes bolométriques présentent une tendance à dériver très lentement, mais de manière sensiblement uniforme, au cours de la vie du détecteur. Cette dérive limite au fil du temps la pertinence des réglages de stimuli initiaux même si le détecteur fonctionne à une température constante stabilisée.

Grâce à l'invention, on obtient :

- une annulation sensible de la mémoire thermique de la matrice d'imagerie **12** et donc des effets de traînée. En effet, avant chaque lecture, les résistances $R_{bolo}$ des bolomètres d'imagerie sont réglées sur une valeur de référence $R_{ref}$ indépendante de la scène. Ainsi, seules les variations de résistance ayant eu lieu pendant l'exposition des bolomètres entre leur thermalisation et leur lecture sont détectées ;
- une commande simple et efficace de la dynamique de scène accessible par la matrice d'imagerie **12** au moyen de l'utilisation d'un pointeur de thermalisation dans la logique de cadencement ;
- une annulation substantielle des effets de dispersion spatiale d'offset et de gain, liée à la formation d'une résistance électrique sensiblement identique sur tous les bolomètres d'imagerie avant l'intégration du signal ;
- l'élimination potentielle du traditionnel système mécanique d'obturation optique (ou « shutter »), ce qui améliore notoirement l'intérêt économique, la continuité de service du détecteur lors d'une phase d'observation, et la durée de vie du système.
- Une augmentation substantielle de la dynamique de scène quelle que soit la température du plan focal si celle-ci est susceptible de variation.

Il a été décrit un mode de réalisation particulier de l'invention.

En variante, les sources de courant **56** sont pilotables. Par exemple, un profil de courant variable pendant la durée de thermalisation peut être préalablement déterminé de manière à encore optimiser cette durée.

De même, il a été décrit une thermalisation ligne à ligne de la matrice d'imagerie **12**. En variante, un circuit de thermalisation **32** peut être prévu pour chaque bolomètre d'imagerie **102** de la matrice d'imagerie **12**. Ceci est particulièrement avantageux lorsqu'un circuit de mesure **22** est également prévu pour chaque bolomètre d'imagerie. On obtient ainsi une thermalisation synchrone de tous les bolomètres d'imagerie, ce qui diminue sensiblement des artéfacts induits par une thermalisation ligne par ligne de la matrice d'imagerie.

De même, il a été décrit une thermalisation d'une matrice d'imagerie associée à une structure de compensation. On comprendra que la présente invention s'applique également à une matrice d'imagerie associée à une structure dite de « référence », telle que décrite dans le document « Performance of 320x240 Uncooled Bolometer-type Infrared Focal Plane Arrays » de Yutaka Tanake et al., Proc. SPIE, vol 5074.

De même encore, l'invention peut être appliquée à des modes de lecture qui mettent en oeuvre d'autres techniques de réjection du courant de mode commun, par exemple à l'aide de la polarisation d'un pont bolométrique de type pont de Wheatstone.

La présente invention trouve application dans le domaine des capteurs d'image à détection bolométrique, quelle que soit la bande de fréquences de détection ou le type de matériau bolométrique utilisé pour fabriquer les bolomètres d'imagerie et de référence, comme par exemple du silicium amorphe (a-Si), de l'oxyde de vanadium (Vox), un métal.

Par sa capacité d'adaptation à différentes températures de fonctionnement d'un capteur d'image à détection bolométrique, l'invention s'applique aussi bien aux capteurs régulés thermiquement qu'aux capteurs opérant à une température variable du plan focal (communément désigné par l'expression anglo-saxonne « TEC-LESS »), et cela qu'un obturateur ait été ou non prévu en association avec l'optique.

**Revendications**

1. Système de détection d'un rayonnement infrarouge comportant :

   - une matrice de bolomètres résistif d'imagerie (102) ; et
   - des circuits de mesure (22) aptes à être connectés électriquement aux bolomètres d'imagerie (102) pour une lecture de signaux électriques dépendants des résistances électriques de ceux-ci,

   **caractérisé en ce qu'**il comprend des moyens (32) de commande de la résistance électrique des bolomètres d'imagerie (102) par injection de courant dans ceux-ci, les moyens (32) de commande comportant une source de courant (56) connectée transitoirement à l'une des bornes desdits bolomètres résistifs d'imagerie (102) afin de créer un échauffement des bolomètres d'imagerie (102), ledit échauffement engendrant une diminution de la résistance électrique des bolomètres d'imagerie (102) jusqu'à atteindre une résistance prédéterminée ($R_{ref}$), les moyens de commande (32) réglant les résistances électriques des bolomètres d'imagerie (102) sur une valeur commune au moins une fois par cycle de lecture de la matrice de bolomètres par les circuits de mesure (22).

2. Système de détection d'un rayonnement infrarouge selon la revendication 1, **caractérisé en ce que**, pour chaque bolomètre résistif d'imagerie (102), la détection de la résistance prédéterminée ($R_{ref}$) est réalisée par une comparaison d'une tension ($V_B$) aux bornes du bolomètre résistif d'imagerie (102) avec une tension prédéterminée ($V_{ref}$).

3. Système de détection d'un rayonnement infrarouge selon la revendication 2, **caractérisé en ce qu'**il comprend des moyens (58) de connexion de la source de courant (56) à ladite borne des bolomètres résistif d'imagerie (102), lesdits moyens (58) de connexion étant commandés par un comparateur (62) entre la tension ($V_B$) aux bornes du bolomètre résistif d'imagerie (102) et la tension prédéterminée ($V_{ref}$).

4. Système de détection d'un rayonnement infrarouge selon l'une des revendications 1 à 3, **caractérisé en ce que** les moyens (32) de commande sont activés pour la commande de la résistance électrique d'un bolomètre d'imagerie après chaque lecture dudit bolomètre.

5. Système de détection d'un rayonnement infrarouge selon l'une des revendications 1 à 4, **caractérisé** qu'il comprend en outre des moyens (18) de commande d'une dynamique thermique de scène accessible par le système en fonction d'une dynamique prédéterminée du circuit de mesure (22).

6. Système de détection d'un rayonnement infrarouge selon la revendication 5, **caractérisé en ce que** les moyens de commande de la dynamique de scène comprennent des moyens (18) aptes à activer la lecture d'un bolomètre d'imagerie par le circuit de mesure (22) une fois écoulée une durée prédéterminée d'exposition depuis une désactivation des moyens (32) de commande de la résistance du bolomètre d'imagerie.

**7.** Système de détection d'un rayonnement infrarouge selon la revendication 6, *caractérisé* **en ce que** la durée d'exposition est sélectionnée pour que la dynamique thermique de scène soit inférieure ou égale à une dynamique correspondante du circuit de mesure (22).

**8.** Système de détection d'un rayonnement infrarouge selon l'une des revendications 5 à 7, *caractérisé:*

- **en ce que** le circuit de mesure (22) est apte à lire la matrice ligne par ligne,
- **en ce que** les moyens (32) de commande de la résistance sont aptes à commander les résistances électriques des bolomètres d'imagerie de la matrice ligne par ligne,

  ▪ et en ce que le système comporte en outre des moyens (18) de cadencement de la lecture et de la commande des résistances électriques des bolomètres de sorte que la lecture d'une ligne de la matrice soit décalée d'un nombre prédéterminé de lignes de la commande des résistances électriques des bolomètres d'une ligne de la matrice.

**9.** Système de détection d'un rayonnement infrarouge selon l'une quelconque des revendications précédentes, *caractérisé* **en ce qu'**il comporte un circuit de commande de résistance associé à chaque bolomètre d'imagerie de la matrice bolométrique et apte à commander la résistance de celui-ci.

**10.** Système de détection d'un rayonnement infrarouge selon l'une quelconque des revendications 1 à 7, *caractérisé* **en ce qu'**il comporte un circuit de commande de résistance associé à chaque colonne de la matrice et apte à commander la résistance de chaque bolomètre de cette colonne.

**11.** Système de détection d'un rayonnement infrarouge selon l'une quelconque des revendications précédentes, *caractérisé* **en ce que** les moyens de commande (32) sont aptes à fixer les résistances électriques des bolomètres d'imagerie (102) sur une valeur commune dépendante de la température du substrat au-dessus duquel sont formés les bolomètres d'imagerie (102).

**12.** Système de détection d'un rayonnement infrarouge selon la revendication 11, *caractérisé* **en ce que** les moyens de commande comportent un amplificateur (106) contre-réactionné par un bolomètre (104) thermalisé au substrat, la sortie de l'amplificateur (106) formant une correction d'une résistance de référence initiale déterminée pour une température initiale prédéterminée.

**13.** Système de détection d'un rayonnement infrarouge selon la revendication 11, *caractérisé* **en ce que** les moyens de commande comprennent un capteur de température du substrat et une unité de traitement d'informations (28) apte à déterminer, en fonction de la mesure de température, une correction d'une résistance de référence initiale déterminée pour une température initiale prédéterminée

**14.** Procédé de lecture d'un bolomètre résistif d'imagerie (102) d'une matrice de bolomètres (12) constitutive d'un système de détection d'un rayonnement infrarouge selon l'une des revendications 1 à 13, dans lequel la résistance du bolomètre (102) est réglée sur une valeur prédéterminée de résistance commune pour tous les bolomètres de la matrice (12) au moins une fois par cycle de lecture de celui-ci par injection de courant dans celui-ci.

**Fig. 1**

**Fig. 2**

**Fig. 3**

Fig. 4

**Fig. 5**

EP 3 205 991 A1

Europäisches
Patentamt

European
Patent Office

Office européen
des brevets

**RAPPORT DE RECHERCHE EUROPEENNE**

Numéro de la demande

EP 17 15 7363

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y<br>A | WO 98/35212 A1 (INDIGO SYSTEMS CORP [US])<br>13 août 1998 (1998-08-13)<br>* page 14, ligne 21 - ligne 23 *<br>* page 17, ligne 4 - ligne 7 *<br>* page 17, ligne 19 - ligne 21 *<br>* page 17, ligne 25 - ligne 28 *<br>* page 26, ligne 6 - ligne 7 *<br>* page 27, ligne 28 - ligne 31 *<br>* page 31, ligne 32 - page 32, ligne 33 *<br>----- | 1,4-10,<br>13,14<br>2,3<br>12 | INV.<br>G01J5/24 |
| X<br>Y<br>A | US 2005/029453 A1 (ALLEN THOMAS P [US] ET<br>AL) 10 février 2005 (2005-02-10)<br>* alinéas [0060] - [0063], [0067] -<br>[0069], [0074], [0081], [0082],<br>[0092], [0093], [0095], [0096],<br>[0104], [0107], [0110], [0115] *<br>* alinéa [0137] *<br>* figure 6.10 *<br>----- | 1,4-11,<br>14<br>2,3<br>12 | |
| X | JP 2002 310783 A (MITSUBISHI ELECTRIC<br>CORP) 23 octobre 2002 (2002-10-23)<br>* alinéas [0008] - [0010], [0013],<br>[0016], [0020], [0026] *<br>----- | 1,14 | DOMAINES TECHNIQUES<br>RECHERCHES (IPC)<br><br>G01J |
| Y | US 2006/231760 A1 (LEE HEE C [KR] ET AL<br>LEE HEE CHUL [KR] ET AL)<br>19 octobre 2006 (2006-10-19)<br>* figure 5 *<br>----- | 2,3 | |

Le présent rapport a été établi pour toutes les revendications

| Lieu de la recherche | Date d'achèvement de la recherche | Examinateur |
|---|---|---|
| Munich | 10 juillet 2017 | Jacquin, Jérôme |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 15 7363

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-07-2017

| Document brevet cité au rapport de recherche | | | Date de publication | Membre(s) de la famille de brevet(s) | | | Date de publication |
|---|---|---|---|---|---|---|---|
| WO | 9835212 | A1 | 13-08-1998 | AU | 6263498 | A | 26-08-1998 |
| | | | | DE | 69830731 | D1 | 04-08-2005 |
| | | | | DE | 69830731 | T2 | 04-05-2006 |
| | | | | EP | 1007920 | A1 | 14-06-2000 |
| | | | | US | 6028309 | A | 22-02-2000 |
| | | | | WO | 9835212 | A1 | 13-08-1998 |
| US | 2005029453 | A1 | 10-02-2005 | EP | 1664692 | A2 | 07-06-2006 |
| | | | | US | 2005029453 | A1 | 10-02-2005 |
| | | | | WO | 2005015261 | A2 | 17-02-2005 |
| JP | 2002310783 | A | 23-10-2002 | AUCUN | | | |
| US | 2006231760 | A1 | 19-10-2006 | AUCUN | | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Uncooled amorphous silicon enhancement four 25$\mu$m pixel pitch achievement. **E. MOTTIN et al.** Infrared Technology and Application XXVIII. SPIE, vol. 4820

- Uncooled amorphous silicon enhancement for 25$\mu$m pixel pitch achievement. **E. MOTTIN et al.** Infrared Technology and Application XXVIII. SPIE, vol. 4820
- **YUTAKA TANAKE et al.** Performance of 320x240 Uncooled Bolometer-type Infrared Focal Plane Arrays. *Proc. SPIE,* vol. 5074